# EUROPÄISCHE PATENTANMELDUNG

(11) **EP 1 162 761 A2**
(43) Veröffentlichungstag der Anmeldung: **12.12.2001**
(21) Anmeldenummer: 01113273.5
(22) Anmeldetag: 31.05.2001
(51) Int. Cl.: H04B 7/005

(54) **Vorrichtung und Verfahren zur Steuerung der Anwendung eines Empfangsparameters für eine Sende/Empfangsvorrichtung**

(30) Priorität: 06.06.2000 DE 10027881
(71) Anmelder: Fraunhofer-Gesellschaft zur Förderung der angewandten Forschung e.V., 80636 München (DE)
(72) Erfinder: Lucas, Nestor, 91052 Erlangen (DE); Gerhäuser, Heinz, 91344 Waischenfeld (DE); Spies, Peter, 91058 Erlangen (DE)
(74) Vertreter: Schoppe, Fritz, Dipl.-Ing.

(57) **Zusammenfassung**

Eine erfindungsgemäße Vorrichtung zum Steuern der Verwendung eines Empfangsparameters, wie z.B. des RSSI-Werts, eines vorhergehenden Empfangsvorgangs zur Steuerung einer Sende/Empfangsvorrichtung, wie z.B. eines FDMA/TDMA/TDD-Systems, während eines Sendevorgangs, wobei der Empfangsparameter eine Empfangsbedingung des vorhergehenden Empfangsvorgangs angibt, umfaßt eine Einrichtung (10) zum Erfassen einer Sendefrequenz des Sendevorgangs und zum Erfassen einer Empfangsfrequenz des vorhergehenden Empfangsvorgang, eine Einrichtung (20) zum Erfassen des Empfangsparameters des vorhergehenden Empfangsvorgangs, eine Vergleichseinrichtung (40) zum Vergleichen der Sendefrequenz des Sendevorgangs mit der Empfangsfrequenz des vorhergehenden Empfangsvorgangs und zum Anwenden des Empfangsparameters bei der Steuerung der Sende/Empfangsvorrichtung während des Sendevorgangs, falls die Sendefrequenz und die Empfangsfrequenz übereinstimmen, und zum Unterdrücken der Anwendung, falls sich die Sendefrequenz und die Empfangsfrequenz unterscheiden. In dem Fall eines FDMA/TDMA/FDD-Systems umfaßt eine erfindungsgemäße Vorrichtung eine Vergleichseinrichtung (40) zum Vergleichen der Empfangsfrequenz eines nächsten Empfangsvorgangs mit der Empfangsfrequenz eines vorhergehenden Empfangsvorgangs und zum Anwenden des Empfangsparameters bei der Steuerung der Sende/Empfangsvorrichtung während des nächsten Empfangsvorgangs bei Übereinstimmung und zum Unterdrücken der Anwendung bei Nichtübereinstimmung.

## Beschreibung

Die vorliegende Erfindung bezieht sich auf Sende/Empfangsvorrichtungen und insbesondere auf eine Kanalbelegungs- und Empfangssignalstärkeuntersuchung für Funksysteme, die ein kombiniertes FDMA/TDMA-Zugriffsverfahren verwenden, wie z.B. TDD-Full-Duplex-Systeme, wie z.B. schnurlose Telefone des DECT-Standards und einige Mobiltelefonstandards, wie z.B. PACS-UB und PHS, sowie die herkömmlichen FDD-Full-Duplexbasierten Mobiltelefonstandards, wie z.B. GSM, DCS und PCS.

Die Anforderungen an drahtlose Kommunikationssysteme sind heutzutage sehr anspruchsvoll in Bezug auf deren Mehrbenutzerfähigkeit, Datenratenerhöhung und besonders auf deren Leistungsverbrauch. Jedem Funkstandard wird ein Frequenzband zugewiesen, innerhalb dessen mehrere Benutzer gleichzeitig kommunizieren können. Hierzu muß ein geeignetes Verfahren vorhanden sein, um einen Mehrfachzugriff zu organisieren. Normalerweise wird eine Kombination aus Frequenz- und Zeitmultiplexing bzw. aus einem Frequenz- und Zeitmultiplexbetrieb verwendet, die zu einer optimalen Nutzung des Frequenzbandes führt.

Innerhalb des Frequenzbandes sind durch das FDMA- (FDMA = Frequency Division Multiple Access = Frequenzunterteilungsmehrfachzugriff) Verfahren beispielsweise eine Anzahl von F Trägerfrequenzen definiert. Durch das TDMA- (TDMA = Time Division Multiple Access = Zeitunterteilungsmehrfachzugriff) Verfahren wird jede dieser F Frequenzen in periodisch auftretende Rahmen bzw. Frames unterteilt. Jeder Rahmen enthält eine Anzahl von N Zeitschlitzen bzw. Slots, wobei auf diese einzelnen Zeitschlitze während der Datenübertragung von N/2 Benutzern zugegriffen wird. Um das Senden und Empfangen der Basisstation und der mehreren Mobilstationen zu organisieren, erfolgt ein Duplexbetrieb, und zwar entweder mittels Zeitunterteilungsduplexing bzw. mittels eines TDD- (TDD = Time Division Duplexing) Verfahrens oder mittels Frequenzunterteilungsduplexing bzw. eines FDD- (FDD = Frequency Division Duplexing) Verfahrens. Beim TDD-Verfahren werden die ersten N/2 Zeitschlitze zum Senden von einer Basisstation zu einer Mobilstation bzw. in der Downlink-Richtung verwendet, während die nachfolgenden N/2 Zeitschlitze zum Senden von der Mobilstation zur Basisstation bzw. in der Uplink-Richtung verwendet werden. Der Kanalaufbau für einen einzelnen Benutzer wird erst durch eine Frequenzauswahl, d.h. eine von F möglichen Frequenzen, begonnen. Diese Frequenz kann N/2 Benutzern zugewiesen werden, was zu einem Mehrfachzugriffsverfahren von F*(N/2) gleichzeitigen Kommunikationskanälen führt.

Einige Funkstandards, wie z.B. DECT (DECT = Digital Enhanced Cordles Telecommunications = verbesserte digitale schnurlose Telekommunikationen), sehen keine Frequenzplanung vor, wobei die Sendesignalstärke immer der von dem entsprechenden Standard maximal erlaubten Sendesignalstärke entspricht, um die Systemfunktionalität sogar unter "Worst-Case"-Bedingungen sicherstellen zu können. Ein RSSI-Wert (RSSI = Received Signal Strength Indicator = Empfangssignalstärkeanzeiger) steht zur Verfügung, um den Kanalbelegungsstand zu erkennen und herauszufinden, welche Basisstation RFP einer Mobilstation PP die besten Anmeldungsbedingungen anbietet. Die einzige zur Zeit ausgeführte Leistungsverwaltung bildet das Ein- und Ausschalten von gewissen Blöcken des Empfangspfades, wie z.B. eines Mischers, von Zwischenfrequenzverstärkern und eines Frequenzmodulationsdemodulators, sowie des Sendepfades, wie z.B. eines Vorverstärkers und des Leistungsverstärkers, der Sende/Empfangsschaltung, wenn diese Blöcke nicht erforderlich sind.

In Klaus David und Thorsten Benkner, Digitale Mobilfunksysteme, Stuttgart 1996, S. 343 - 345, wird die Leistungsregelung bei GSM-Systemen und der Unterschied zu BTS 1800-Systemen beschrieben. Für die Leistungsregelung des Uplinks in der Mobilstation werden Messungen in der Basisstation vorgenommen, wobei die Mobilstation angewiesen wird, die Leistung entsprechend den in der Basisstation vorgenommenen Messungen anzupassen. Die Leistungsregelung des Downlinks findet in umgekehrter Weise statt.

Die DE 198 50 849 A1 beschreibt ein Verfahren und ein Funk-Kommunikationssystem zur Sendeleistungsregelung zwischen einer Basisstation und einer Teilnehmerstation. Die Sendeleistungserhöhungen bzw. -verringerungen in einer Mobilstation werden durch Stellanweisungen von der Basisstation zu der Mobilstation gesteuert, wobei die Mobilstation die Stellanweisungen basierend auf den empfangenen Aussendungen der Mobilstation bestimmt. Insbesondere finden die Sendeleistungserhöhungen und -verringerungen schrittweise statt, wobei die Schrittgrößen für die Sendeleistungserhöhung bzw. -verringerung unterschiedlich sind.

Die EP 0999 656 A1 beschreibt ein Mobilfunkkommunikationssystem mit einem Multicast-Kanal. Bei diesem System findet die Steuerung der Übertragungsleistung einer Basisstation basierend auf Empfangsleistungsmessungen einer Multicast-Nachricht von der Mobilstation statt. Falls die Empfangsleistung nicht ausreichend ist, wird von den Mobilstationen ein Übertragungsleistungserhöhungsanforderungssignal zu der Mobilstation gesendet, das die Basisstation auffordert, die Übertragungsleistung der Multicast-Nachricht zu erhöhen.

Eine Aufgabe der vorliegenden Erfindung besteht darin, eine Vorrichtung und ein Verfahren zum Steuern der Anwendung eines Empfangsparameters eines vorhergehenden Empfangsvorgangs auf einen Sendevorgang einer Sende/Empfangsvorrichtung zu schaffen, so daß der Leistungsverbrauch der Sende/Empfangsvorrichtung verringert werden kann.

Diese Aufgabe wird durch eine Vorrichtung gemäß Anspruch 2 und ein Verfahren gemäß Anspruch 1 gelöst.

Eine weitere Aufgabe der vorliegenden Erfindung besteht darin, eine Vorrichtung und ein Verfahren zum Steuern der Anwendung eines Empfangsparameters eines vorhergehenden Empfangsvorgangs auf einen nächsten Empfangsvorgang einer Sende/Empfangsvorrichtung zu schaffen, so daß der Leistungsverbrauch der Sende/Empfangsvorrichtung verringert werden kann.

Diese Aufgabe wird durch eine Vorrichtung gemäß Anspruch 11 und ein Verfahren gemäß Anspruch 10 gelöst.

Die erfindungsgemäßen Vorrichtungen und Verfahren sind vorgesehen, um bei FDMA- bzw. TDMA-basierten Systemen interne Signale zwischen einer Sende/Empfangsschaltung und einem Basisband-Prozessor des Mobilsystems zu verwenden, um Merkmale des ganzen Funknetzes zu erkennen. Diese Merkmale können zu dynamischen Leistungsverwaltungsmaßnahmen mittels der Empfangssignalstärke jedes Benutzers verwendet werden. Insbesondere werden die vorhandenen Signale der Sende/Empfangsschaltung, wie z.B. der RSSI-Wert oder Empfangssignalstörinformationen, und des Basisband-Prozessors, wie z.B. Trägerfrequenzauswahlinformationen, verwendet, um eine Systemüberwachung auszuführen, die die Verlustleistung reduzieren kann.

Gemäß einem Ausführungsbeispiel für eine Vorrichtung und ein Verfahren zum Steuern der Anwendung eines Empfangsparameters eines vorhergehenden Empfangsvorgangs auf einen Sendevorgang ist die Sende/Empfangsvorrichtung beispielsweise eine Sende/Empfangsvorrichtung mit einem Zeitunterteilungsduplexbetrieb. Die Signale eines Basisband-Prozessors werden verwendet, um festzustellen, ob sich die Sendefrequenz des Sendevorgangs von einer Empfangsfrequenz eines vorhergehenden Empfangsvorgangs unterscheidet. Wenn sich die Frequenzen nicht unterscheiden, bedeutet dies, daß der Basisband-Prozessor dem Benutzer zum Senden den selben Kanal wie zuvor beim Empfangen zuweist. Gemäß der Erfindung können unter diesen Umständen die Werte, die die Empfangsbedingungen des vorhergehenden Empfangsvorgangs charakterisieren, wie z.B. der Empfangssignalstärkewert bzw. der RSSI-Wert, der bei dem vorhergehenden Empfangsvorgang gemessen wurde, verwendet werden, um Maßnahmen in Bezug auf die Leistungsverwaltung für den Sendevorgang zu treffen. Diesem Vorgehen liegt die Annahme zugrunde, daß eine hohe Empfangssignalstärke bzw. gute Empfangsbedingungen auf gute Sendebedingungen rückschließen lassen. Folglich kann eine Leistungsverwaltung in dem Fall der Übereinstimmung der Sende- und Empfangsfrequenz den RSSI-Wert verwenden, um die elektronischen Komponenten einer Sende/Empfangsschaltung derart zu steuern, daß der Leistungsverbrauch verringert wird. Bei einer guten Empfangsbedingung bzw. einem hohen RSSI-Wert können beispielsweise die Versorgungsspannung und/oder die Bias-Spannung bzw. die Eingangsvorspannung bestimmter elektronischer Komponenten reduziert werden, um den Leistungsverbrauch zu verringern. Die sich ergebende Reduzierung der Verstärkung und Zunahme des Rauschens einzelner elektronischer Komponenten ist zulässig, wenn gute Empfangsbedingungen vorliegen, da dieselben bei normaler Ansteuerung für Worst-Case-Bedingungen ausgelegt und folglich normalerweise überdimensioniert sind.

Falls sich ferner die Empfangsfrequenz des folgenden bzw. nächsten Empfangsvorgangs des folgenden Rahmens nicht von der Sendefrequenz unterscheidet, bedeutet dies, daß der Basisband-Prozessor dem Benutzer weiterhin den selben Kanal zuweist. In diesem Fall können die zuletzt gemessenen Empfangsparameter, wie z.B. der RSSI-Wert, auf eine Leistungsverwaltung bezüglich des folgenden Empfangsvorgangs verwendet werden. Entsprechende Leistungsverwaltungsmaßnahmen können beispielsweise die Reduzierung der Versorgungsspannung oder Bias-Spannung eines rauscharmen Eingangsverstärkers und/oder die Reduzierung der Versorgungsspannung eines Mischers, von Zwischenfrequenzverstärkern und eines Oszillators bei einem höheren RSSI-Wert umfassen, um eine Leistungseinsparung zu erzielen, da die entstehende Verringerung der Verstärkung und Zunahme des Phasenrauschens bei einem hohen RSSI-Wert tolerierbar ist, da die Komponenten für Worst-Case-Bedingungen ausgelegt und folglich meist überdimensioniert sind. Findet jedoch ein Frequenzwechsel statt, so wird der RSSI-Wert nicht auf den nächsten Empfangsvorgang angewendet, und es findet keine Leistungsverwaltung anhand des RSSI-Werts statt.

Gemäß einem Ausführungsbeispiel für ein Verfahren und eine Vorrichtung zum Steuern der Anwendung eines Empfangsparameters eines vorhergehenden Empfangsvorgangs auf einen nächsten Empfangsvorgang ist die Sende/Empfangsvorrichtung eine Sende/Empfangsvorrichtung eines Frequenzunterteilungsduplexbetriebs bzw. ein FDD-System. Die internen Signale eines Basisbandprozessors werden verwendet, um zu bestimmen, ob dem Benutzer zwischen zwei aufeinanderfolgenden Empfangsvorgängen eine unterschiedliche Empfangsfrequenz zugewiesen wird. Falls dies nicht der Fall ist, können die Werte, die die Empfangsbedingungen des vorhergehenden Empfangsvorgangs charakterisieren, wie z.B. der RSSI-Wert oder Empfangssignalstörinformationen, auf den Empfangsvorgang angewendet werden, der dem Empfangsvorgang, bei dem der RSSI-Wert erfaßt wurde, folgt und es können die Leistungsverwaltungsmaßnahmen getroffen werden, die im vorhergehenden erwähnt wurden. Falls jedoch eine Frequenzneuzuteilung stattfand, bedeutet dies, daß der Empfangsparameter, wie z.B. der RSSI-Wert, nicht auf den Empfangsvorgang angewendet werden kann.

Folglich wird bei der vorliegenden Erfindung der RSSI-Wert verwendet, um die herkömmliche statische Leistungsverwaltung, d.h. das Ein- und Ausschalten gewisser Blöcke des Sende- oder Empfangspfades, zu überwinden und eine dynamischere Leistungsverwaltungsstrategie ausführen zu können, die allgemein die Steuerung, Konfigurierung und Versorgung einzelner Systemkomponenten der Sende/Empfangsvorrichtung gemäß einem oder mehreren die Empfangsbedingungen beschreibenden Werten, wie z.B. dem RSSI-Wert, betreffen kann. Je nach RSSI-Wert kann man unterschiedliche Parameter und Konfigurierungen des Systems einstellen, wodurch ein sparsamer Systembetrieb ermöglicht wird.

Bevorzugte Ausführungsbeispiele der vorliegenden Erfindung werden nachfolgend bezugnehmend auf die beiliegenden Zeichnungen näher erläutert. Es zeigen:
- Fig. 1: ein Blockdiagramm, das eine mögliche Realisierung für Vorrichtungen gemäß der vorliegenden Erfindung darstellt;
- Fig. 2: den Aufbau eines Zeitrahmens gemäß einem Beispiel eines TDD-Systems; und
- Fig. 3: die Funktionsweise eines Ausführungsbeispiels gemäß der vorliegenden Erfindung bei dem in Fig. 2 dargestellten TDD-System, wobei die Funktionsweise bezüglich zweier aufeinanderfolgender Zeitrahmen dargestellt ist.

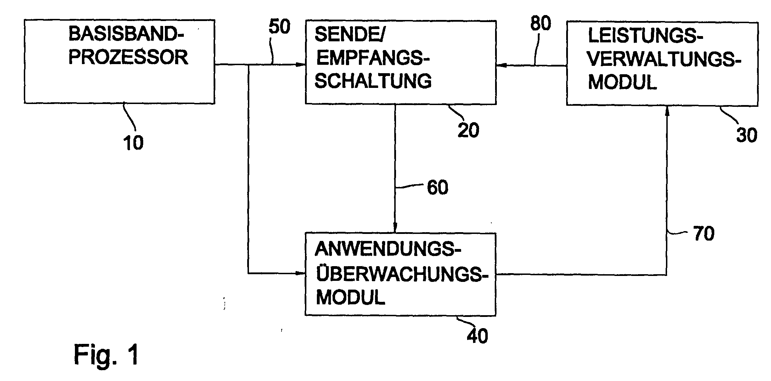

Es wird nun auf Fig. 1 Bezug genommen, in der eine mögliche Realisierung für erfindungsgemäße Vorrichtungen gezeigt ist.

Fig. 1 zeigt einen Basisband-Prozessor 10, eine Sende/Empfangsschaltung 20, ein Leistungsverwaltungsmodul 30 sowie ein Anwendungsüberwachungsmodul 40. Der Basisband-Prozessor ist über einen 3-Draht-Bus bzw. einen 3-Wire-Bus 50 mit der Sende/Empfangsschaltung 20 verbunden, um Steuersignale an die Sende/Empfangsschaltung 20 auszugeben. Auch das Anwendungsüberwachungsmodul 40 ist über den Bus 50 mit dem Basisband-Prozessor 10 verbunden, um von demselben die Steuersignale zu erhalten. Die Sende/Empfangsschaltung 20 ist mit dem Anwendungsüberwachungsmodul 40 über eine Leitung 60 verbunden, um eine Mehrzahl von Empfangsparametern, wie z.B. den RSSI-Wert bzw. den Empfangssignalstärkewert oder Empfangssignalstörinformationen, an das Anwendungsüberwachungsmodul 40 auszugeben. Das Anwendungsüberwachungsmodul 40 ist über eine Leitung 70 mit dem Leistungsverwaltungsmodul 30 verbunden, um basierend auf den Eingangssignalen von dem Basisband-Prozessor 10 und der Sende/Empfangsschaltung 20 Signale, die die Anwendung der Mehrzahl von Anwendungsparametern betreffen, an das Leistungsverwaltungsmodul 30 auszugeben. Das Leistungsverwaltungsmodul 30 ist wiederum über eine Leitung 80 mit der Sende/Empfangsschaltung 20 verbunden, um Steuersignale an einzelne interne Komponenten (nicht gezeigt) der Sende/Empfangsschaltung 20 auszugeben, um basierend auf den Signalen von dem Anwendungsüberwachungsmodul 40 den Leistungsverbrauch zu verringern.

Im folgenden wird nun die Funktionsweise der in Fig. 1 gezeigten Vorrichtung beschrieben. Der Basisband-Prozessor 10 verwendet den 3-Draht-Bus 50 zur Programmierung der Sende/Empfangsschaltung 20 bei einzelnen Zeitschlitzen und zwar sowohl für Sende- als auch für Empfangsvorgänge. Der digitale Datenstrom auf dem Bus 50 enthält Zahlenwerte zur Steuerung von elektronischen Komponenten der Sende/Empfangsschaltung 20, wie z.B. für ein PLL (Main, Swallow und Referenz), die Gleichspannungsvorspannung (Pretunning) für einen Oszillator, Informationen über Leistungssparmodi und Charge-Pump-Strombedingungen. Dieser Bus 50 ist von großer Bedeutung für die Charakterisierung des Radio-Links und ermöglicht eine Systemüberwachungsstrategie, wie sie im folgenden näher erläutert werden wird. Folglich steuert der Basisband-prozessor 10 über den 3-Draht-Bus 50 die elektronischen Komponenten der Sende/Empfangsschaltung 20, während das Anwendungsüberwachungsmodul 40 über den 3-Draht-Bus 50 die Frequenz jedes Zeitschlitzes überwachen und erfassen und die von dem Basisbandprozessor ausgeführte Neuzuteilung von Kanälen bzw. den Wechsel von Frequenzen erkennen kann.

Im folgenden wird nun die Funktionsweise der in Fig. 1 gezeigten Vorrichtung beschrieben, falls die Vorrichtung zur Steuerung der Anwendung eines Empfangsparameters eines vorhergehenden Empfangsvorgangs auf einen Sendevorgang verwendet wird, wie z.B. bei einem TDD-System. In dem Fall eines TDD-Systems erfaßt das Anwendungsüberwachungsmodul 40 beispielsweise die Sende- und Empfangsfrequenzen aufeinanderfolgender Zeitrahmen. Zusätzlich erfaßt das Anwendungsüberwachungsmodul 40 über die Sende/Empfangsschaltung 20 zu jedem Empfangsvorgang eine Mehrzahl von Empfangsparametern, wie z.B. die Empfangssignalstärke bzw. einen RSSI-Wert und/oder Empfangssignalstörinformationen. Die Empfangssignalstörinformationen werden durch die Sende/Empfangsschaltung 20 ermittelt, indem die Empfangssignalstärke nach einem Bandpaßfilter (nicht gezeigt) der Sende/Empfangsschaltung 20, d.h. der RSSI-Wert, und eine Empfangssignalstärke vor diesem Bandpaßfilter gemessen wird, und diese beiden Werte miteinander verglichen werden, um zu bestimmen, welche Störleistung sich in dem Empfangssignal, d.h. außerhalb des Durchlaßbandes des Filters, befindet. Das Anwendungsüberwachungsmodul 40 stellt einen Vergleich zwischen den von dem Bus 50 empfangenen Empfangs- und Sendefrequenzen an, um Frequenzwechsel zwischen Empfangs- und Sendevorgängen zu bestimmen. Falls ein Frequenzwechsel von einem Empfangs- zu einem Sendevorgang stattfindet, gibt das Anwendungsüberwachungsmodul 40 die Mehrzahl von Empfangsparametern, die dasselbe von der Sende/Empfangsschaltung 20 empfängt, nicht an das Leistungsverwaltungsmodul aus, um die Anwendung dieser Mehrzahl von Empfangsparametern auf den Sendevorgang zu unterdrücken. Es kann vorgesehen sein, daß das Anwendungsüberwachungsmodul 40 stattdessen gespeicherte Empfangssignalparameter an die Sende/Empfangsschaltung 20 ausgibt, die den "Worst-Case"-Bedingungen des entsprechenden Standards entsprechen, oder daß dasselbe Null ausgibt.

Falls das Anwendungsüberwachungsmodul 40 bestimmt, daß kein Frequenzwechsel stattgefunden hat, gibt dasselbe die Mehrzahl von Empfangsparametern an das Leistungsverwaltungsmodul 30 aus, um Leistungsverwaltungsmaßnahmen durch das Leistungsverwaltungsmodul 30 basierend auf den Empfangsparametern des Empfangsvorgangs zu ermöglichen. Das Leistungsverwaltungsmodul 30 wendet die Mehrzahl von Empfangsparametern auf den Empfangsvorgang an, indem dieselbe bestimmte elektronische Komponenten der Sende/Empfangsschaltung 20 (nicht gezeigt) mit weniger Versorgungsspannung oder Bias-Spannung bzw. Eingangsvorspannung versorgt, wenn die empfangenen Empfangsparameter gute Empfangsbedingungen anzeigen. Das Leistungsverwaltungsmodul 30 kann beispielsweise entweder die Versorgungsspannung oder die Bias-Spannung oder beide eines Leistungsverstärkers bzw. einer Sendeendstufe der Sende/Empfangsschaltung 20 bei einem hohen RSSI-Wert reduzieren, um den Leistungsverbrauch zu verringern. Dieser Maßnahme liegt die Annahme zugrunde, daß gute Empfangsbedingungen bei der Sendefrequenz auf eine gute Funkverbindung zur Basisstation schließen lassen, so daß die Verstärkung bzw. die Sendeleistung des Leistungsverstärkers reduziert werden kann, um den Leistungsverbrauch zu reduzieren.

Das Anwendungsüberwachungsmodul überwacht ferner einen Frequenzwechsel von einem Sendevorgang zu einem Empfangsvorgang, indem das Anwendungsüberwachungsmodul 40 die entsprechende Sende- und Empfangsfrequenz vergleicht. Falls das Anwendungsüberwachungsmodul 40 feststellt, daß die Empfangsfrequenz und die Sendefrequenz des vorhergehenden Sendevorgangs übereinstimmen bzw. daß kein Frequenzwechsel stattfindet, und zuvor bereits kein Frequenzwechsel zwischen dem vorhergehenden Empfangsvorgang und dem Sendevorgang stattfand, gibt das Anwendungsüberwachungsmodul 40 die Mehrzahl von Empfangsparametern an das Leistungsverwaltungsmodul 30 für eine Anwendung auf den dem Sendevorgang folgenden Empfangsvorgang aus. Die doppelte Überprüfung, daß sowohl von einem Empfangs- zu einem Sendevorgang als auch von dem Sendevorgang zu einem darauffolgenden Empfangsvorgang kein Frequenzwechsel bzw. keine Kanalneuzuteilung stattfindet, bedeutet, daß der Basisband-Prozessor eine gute Trägerfrequenz gefunden und ausgewählt hat und nicht mehr sucht, so daß die Empfangsparameter auf diesen darauffolgenden Empfangsvorgang angewendet werden können.

Der Fall, daß zwischen zwei aufeinanderfolgenden Empfangsvorgängen Frequenzwechsel stattfanden, läßt darauf schließen, daß der Basisbandprozessor 10 noch keine gute Funkverbindung gefunden hat, so daß in diesem Fall die Empfangsparameter nicht auf den folgenden Empfangsvorgang angewendet werden können. In dem Fall, daß keine Frequenzwechsel zwischen zwei aufeinanderfolgenden Empfangsvorgängen stattfanden, wendet das Leistungsverwaltungsmodul 30 die Empfangsparameter des vorhergehenden Empfangsvorgangs auf den folgenden Empfangsvorgang an, um Leistungsverwaltungsmaßnahmen durchzuführen, und damit Leistungseinsparungen vorzunehmen. Bei einem hohen RSSI-Wert kann das Leistungsverwaltungsmodul 30 beispielsweise die Versorgungsspannung oder die Bias-Spannung eines rauscharmen Eingangsverstärkers, eines Mischers oder eines Oszillators der Sende/Empfangsschaltung 20 verringern, da bei einer hohen Eingangssignalstärke eine geringere Verstärkung oder ein höheres Phasenrauschen tolerierbar ist. Bei einem Ausführungsbeispiel wählt das Leistungsverwaltungsmodul 30 basierend auf den Empfangssignalstörinformationen, wenn wenig Störer in dem Empfangssignal vorhanden sind, eines einer Mehrzahl von Filtern der Sende/Empfangsschaltung 20 aus, das breitbandiger ist und dafür weniger Einfügedämpfung aufweist. In Folge dessen kann das Leistungsverwaltungsmodul 30 die Verstärkung von Zwischenfrequenzverstärkern verringern oder die Versorgungsspannung des Oszillators weiter reduzieren, um hierdurch den Leistungsverbrauch zu senken.

Im folgenden wird nun die Funktionsweise der in Fig. 1 gezeigten Vorrichtung beschrieben, falls die Vorrichtung zur Steuerung der Anwendung eines Empfangsparameters eines vorhergehenden Empfangsvorgangs auf einen folgenden Empfangsvorgang verwendet wird, wie z.B. bei einem FDD-System. In dem Fall, daß die in Fig. 1 gezeigte Vorrichtung bei FDD-Systemen angewendet wird, entfallen Rückschlüsse von Empfangsparametern des Empfangsvorgangs auf Sendevorgänge, da bei FDD-Systemen grundsätzlich zwei verschiedene Frequenzen zum Senden und Empfangen verwendet werden. Folglich erfaßt das Anwendungsüberwachungsmodul 40 Frequenzwechsel bzw. Kanalneuzuteilungen zwischen aufeinanderfolgenden Empfangsvorgängen, um zu bestimmen, ob die Mehrzahl von Empfangsparametern eines vorhergehenden Empfangsvorgangs auf den nächsten Empfangsvorgang angewendet werden können. Falls kein Frequenzwechsel bzw. keine Kanalneuzuteilung stattfand, gibt das Anwendungsüberwachungsmodul 40 die Empfangsparameter des vorhergehenden Empfangsvorgangs zur Anwendung auf den nächsten Empfangsvorgang an das Leistungsverwaltungsmodul 30 aus, das basierend auf denselben Leistungsverwaltungsmaßnahmen durchführt, wie sie im vorhergehenden bezüglich TDD-Systemen beschrieben wurden. Falls ein Frequenzwechsel stattfand, kann das Anwendungsüberwachungsmodul 40, wie es im vorhergehenden beschrieben wurde, beispielsweise gespeicherte Werte ausgeben, die den "Worst-Case"-Bedingungen des entsprechenden Standard entsprechen.

Bevor die Funktionsweise der in Fig. 1 gezeigten Vorrichtung in Bezug auf TDD-Systeme detaillierter beschrieben wird, wird darauf hingewiesen, daß andere Realisierungen möglich sind. Es kann beispielsweise vorgesehen sein, daß die Sende/Empfangsschaltung 20 die Empfangsparameter, wie z.B. den RSSI-Wert und die Empfangssignalstörinformationen, direkt an das Leistungsverwaltungsmodul 30 weiterleitet. In diesem Fall würde das Anwendungsüberwachungsmodul 40 über die Leitung 70 lediglich ein Signal senden, das anzeigt, ob das Leistungsverwaltungsmodul 30 die direkt von der Sende/Empfangsschaltung 20 empfangenen Empfangsparameter auf den nächsten Sende- bzw. Empfangsvorgang anwenden darf, und die Leitung 60 würde fehlen. Das Anwendungsüberwachungsmodul könnte beispielsweise ein internes Register aufweisen, auf das durch das Leistungsverwaltungsmodul 30 zugegriffen werden kann, um ein gesetztes oder nicht-gesetztes Bit in dem Register abzufragen. Darüber hinaus kann auch das Leistungsverwaltungsmodul 30 an dem 3-Draht-Bus 50 angeschlossen sein, um weitere Informationen zu erhalten, mittels denen das Leistungsverwaltungsmodul Leistungsverwaltungsmaßnahmen bezüglich der elektronischen Komponenten der Sende/Empfangsschaltung vornehmen kann, wie z.B. die Datenübertragungsrate des nächsten Sende- oder Empfangsvorgangs. Diese Maßnahmen können beispielsweise das übliche Ein- und Ausschalten des Empfangs- bzw. des Sendepfads bei einem Sende- bzw. Empfangsvorgang umfassen, wobei das Leistungsverwaltungsmodul 30 von dem 3-Draht-Bus 50 Signale empfängt, die angeben, ob gerade ein Sende- bzw. Empfangsvorgang vorliegt. Zudem ist es für die vorliegende Erfindung nicht wesentlich, daß der Bus 50 ein 3-Draht-Bus ist, sondern derselbe kann als eine beliebige geeignete Verbindungsleitung ausgeführt sein.

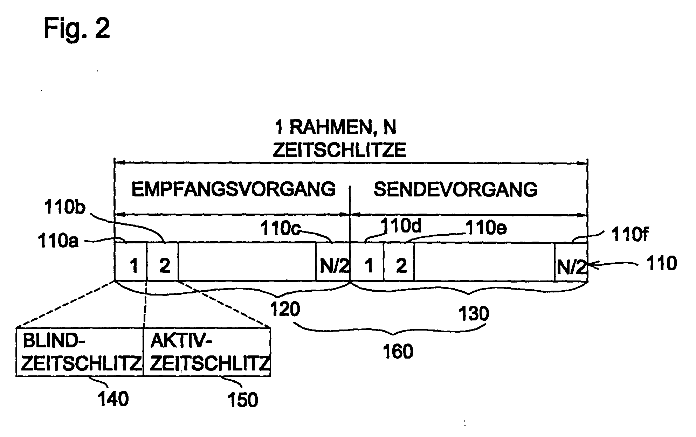

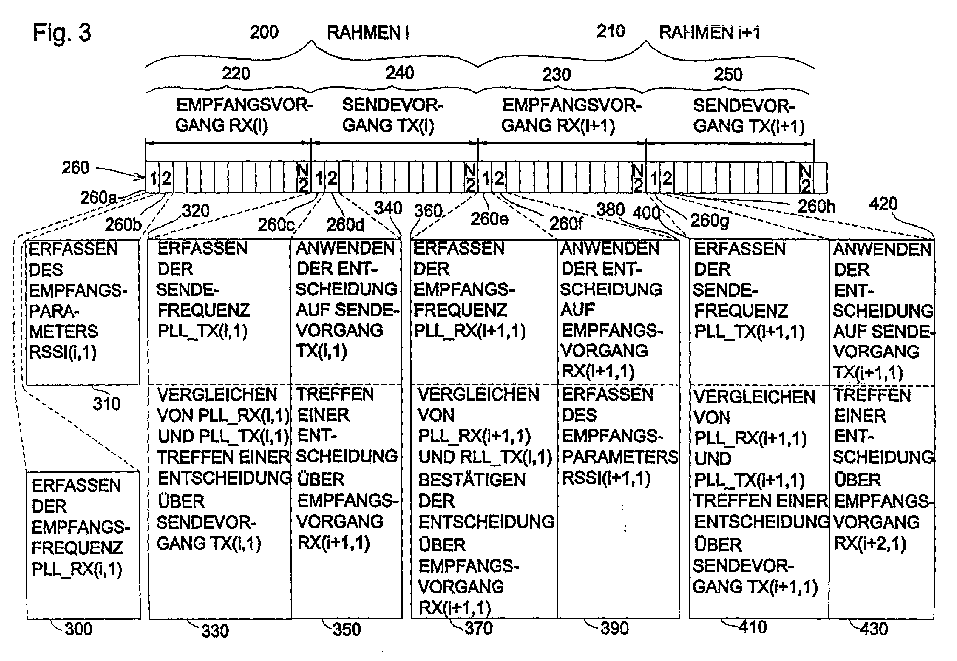

Nachfolgend wird bezugnehmend auf Fig. 2 und 3 die Funktionsweise einer erfindungsgemäßen Vorrichtung für ein exemplarisches TDD-System beschrieben, dessen Rahmenstruktur in Fig. 2 dargestellt ist.

Die in Fig. 2 gezeigte Rahmenstruktur umfaßt einen Zeitrahmen 100, der in N Zeitschlitze 110a, 110b, 110c, 110d, 110e und 110f (lediglich einige sind gezeigt) unterteilt ist, von denen die ersten N/2 einen Empfangsvorgang, bei dem eine Basisstation oder eine andere Mobilstation sendet, bzw. einen Empfangssubrahmen 120 und die darauffolgenden N/2 Zeitschlitze einen Sendevorgang, bei dem Mobilstationen senden, bzw. Sendesubrahmen 130 definieren. Die einzelnen Zeitschlitze 110a - 110f sind wiederum abwechselnd in Blind-Zeitschlitze (Blind Slots) 140 und Aktiv-Zeitschlitze (Active Slot) 150 gegliedert. Jedes Paar eines Blind- und Active-Slots 140 und 150 ist einem von N/2 Benutzern zugeordnet, die die Trägerfrequenz des Rahmens 160 verwenden. Die in Fig. 2 gezeigte Rahmenstruktur bezieht sich beispielsweise auf FDMA/TDMA/TDD-Systeme, wie z.B. DECT-Systeme. Bei diesen Systemen ist jeder Rahmen 100 in die Empfangssubrahmen 120 und Sendesubrahmen 130 eingeteilt. Die Hälfte von den vorhandenen N Zeitschlitzen 110a - 110f des Rahmens 100 werden für einen Datenempfang aus anderen Endgeräten, wie z.B. einer Basisstation oder einer Mobilstation, verwendet, während der Rest der Zeitschlitze 110a-110f des Rahmens 100 Sendezwecke erfüllt. Implementierungseinschränkungen ergeben sich durch die Tatsache, daß nicht alle Zeitschlitze 110a - 110f zum Kanalaufbau zur Verfügung stehen. Der Aufbau von FDMA/TDMA-Systemen ermöglicht der Basisstation oder der Mobilstation, den günstigsten Träger für jeden Zeitschlitz 110a - 110f auszuwählen. Diese Frequenz wird mit Hilfe eines Synthesizers (nicht gezeigt) erzeugt, dessen Zähler dazu über den 3-Draht-Bus 50 von dem Basisband-Prozessor 10 (siehe Fig. 1) programmiert wird. Die Sende/Empfangsschaltung erfordert eine längere Zeitdauer, um sich auf die entsprechende Frequenz einzustellen, als die im Standard vorgesehene Guard-Time. Daraus folgt eine nicht optimierte Zeiteinteilung, da jeder Benutzer zwei aufeinanderfolgende Zeitschlitze belegt, d.h. einen Blind-Zeitschlitz bzw. Blind-Slot 140, um die Frequenz einzustellen, und einen Active-Slot 150, um Daten empfangen oder senden zu können. Der Basisbandprozessor verwendet den 3-Draht-Bus zur Programmierung der Sende/Empfangsschaltung während jedes Blind-Slots 140, und zwar sowohl für Sende- als auch für Empfangsvorgänge. Wie im vorhergehenden erwähnt enthält der digitale Datenstrom auf dem Bus Zahlenwerte zur Steuerung von elektronischen Komponenten der Sende/Empfangsschaltung, wie z.B. für ein PLL (Main, Swallow und Referenz), die Gleichspannungsvorspannung (Pretunning) für einen Oszillator, Informationen über Leistungssparmodi und Charge-Pump-Strombedingungen. Insbesondere gibt der Basisbandprozessor über den 3-Draht-Bus die Frequenz jedes Zeitschlitzes 110 aus, so daß die von dem Basisbandprozessor ausgeführte Neuzuteilung von Kanälen bzw. der Wechsel von Frequenzen erkannt werden kann.

Nachdem bezüglich Fig. 2 ein spezielles Beispiel für eine Rahmenstruktur bei FDMA/TDMA/TDD-Systemen beschrieben worden ist, wird bezugnehmend auf Fig. 3 die Funktionsweise einer erfindungsgemäßen Vorrichtung für diese FDMA/TDMA/TDD-basierten Systeme bezüglich zweier aufeinanderfolgender Rahmen beschrieben.

Fig. 3 zeigt zwei aufeinanderfolgende Rahmen 200, 210, d.h. Rahmen i und i+1, die ihrerseits wiederum jeweils in einen Empfangsvorgang bzw. Empfangssubrahmen 220 bzw. 230, d.h.

RX(i) bzw. RX(i+1), und einen Sendevorgang bzw. Sendesubrahmen 240 bzw. 250, d.h. TX(i) bzw. TX(i+1), aufgeteilt sind. Der Rahmen 200 ist unerläßlich bei einem Verbindungsaufbau und dient zur Initialisierung des Betriebsablaufs. Wie es bereits bezugnehmend auf Fig. 2 beschrieben wurde, besteht jeder Sende- und Empfangsvorgang 220 - 250 aus N/2 Zeitschlitzen 260. Die Funktionsweise wird nachfolgend vornehmlich bezugnehmend auf einen Benutzer beschrieben werden, dem das jeweils erste Slotpaar jedes Empfangs- und Sendevorgangs 220 - 250 zugeordnet ist, d.h. die Blind-Slots 260a, 260c, 260e und 260g und die Aktiv-Slots 260b, 260d, 260f, und 260h.

In einem ersten Schritt 300 liest das Anwendungsüberwachungsmodul die durch den 3-Draht-Bus von dem Basisband-prozessor während des Blind-Slots 260a gelieferten Bits und erfaßt dadurch die Empfangsfrequenz, die im folgenden als PLL_RX(i,1) bezeichnet wird, des ersten Benutzers, dem die jeweils ersten beiden Zeitschlitze 260a-260h zugeordnet sind.

In einem Schritt 310 werden die Empfangssignalstärke bzw. der RSSI-Wert und/oder die Empfangssignalstörinformationen des ersten Empfängers an seinem Active-Slot 260b gemessen bzw. erfaßt und unter RSSI(i,1) gespeichert. Diese ersten zwei Schritte 300, 310 werden für alle möglichen Empfänger im Rahmen i 100 wiederholt, wodurch sich eine Frequenztabelle PLL_RX(i,1) ... PLL_RX(i,N/4) und eine entsprechende Empfangssignalstärketabelle RSSI(i,1) ... RSSI(i,N/4) für den Empfangssubrahmen RX(i) 220 ergibt.

In einem Schritt 320 liest das Anwendungsüberwachungsmodul die durch den 3-Draht-Bus von dem Basisbandprozessor während des Blind-Slots 260c gelieferten Bits und erfaßt hierdurch die Sendefrequenz, die im folgenden PLL_TX(i,1) genannt wird, des ersten Benutzers. Dieser Schritt 320 wird ebenfalls für alle Benutzer im Rahmen i 100 wiederholt, wodurch sich eine Sendefrequenztabelle PLL_TX(i,1) ... PLL_TX(i,N/4) ergibt.

Die Frequenz PLL_TX(i,1) des ersten Sendezeitschlitzpaars 260c, 260d wird während des Blind-Slot 320 mit der Frequenz PLL_RX(i,1) des ersten Empfangszeitschlitzpaars in einem Schritt 330 verglichen. Basierend auf diesem Vergleich wird bei dem Schritt 330 eine der folgenden Entscheidungen getroffen:
- Wenn die beiden Frequenzen PLL_RX(i,1) der Frequenz PLL_TX(i,1) entspricht, bedeutet das, daß der Basisband-prozessor dem ersten Benutzer den selben Kanal zuweist wie vorher, bzw. daß der Basisbandprozessor dem Benutzer beim Sendevorgang TX(i) den selben Kanal wie bei dem Empfangsvorgang RX(i) zuweist. Unter diesen Umständen kann das Leistungsverwaltungsmodul den RSSI(i,1)-Wert (im folgenden wird der RSSI-Wert stellvertretend für eine beliebige Teilmenge aller möglichen Werte verwendet, die die Empfangsbedingungen charakterisieren) verwenden, um Maßnahmen in Bezug auf die Leistungsverwaltung für den folgenden Active-Slot TX(i,j) zu treffen.
- Wenn sich allerdings die Frequenz PLL_RX(i,1) von PLL_TX(i,1) unterscheidet, bedeutet dies, daß der Basisbandprozessor dem Benutzer einen neuen Kanal zugeteilt hat. Dies geschieht, um eine bessere Verbindung aufbauen zu können und bedeutet, daß der RSSI(i,1)-Wert keine Bedeutung für den Sendevorgang TX(i) hat, da derselbe Empfangsbedingungen eines nicht mehr existierenden bzw. nicht mehr zum Senden verwendeten Kanals kennzeichnet. Es wird folglich sichergestellt, daß der RSSI-Wert eines vorhergehenden Empfangsvorgangs nicht auf einen Sendevorgang angewendet wird, wenn sich der RSSI-Wert nicht auf die entsprechende Sendefrequenz bezieht.

Die Entscheidung von Schritt 330, ob der RSSI(i,1)-Wert angewendet werden darf, wird in einem Schritt 340 während des Active-Slot 260d auf den Sendevorgang TX(i) angewendet. Wie es im vorhergehenden bezugnehmend auf Fig. 1 erläutert wurde, können in dem Fall, daß keine Kanalneuzuteilung stattfand, Leistungsverbrauchseinsparungen vorgenommen werden, indem in dem Schritt 340 der RSSI-Wert RSSI(i,1) auf den darauffolgenden Sendevorgang TX(i,1) des ersten Benutzers angewendet wird. Das Leistungsverwaltungsmodul kann beispielsweise die Versorgungsspannung und/oder die Biasspannung einer Sendeendstufe bzw. eines Leistungsverstärkers der Sende/Empfangsschaltung reduzieren, um die Verstärkung und somit den Leistungsverbrauch zu verringern. Hierdurch wird berücksichtigt, daß ein hoher Empfangswert RSSI auf eine gute Funkverbindung zur Basisstation schließen läßt, so daß nicht die maximal vorgesehene Sendeleistung erforderlich ist. Weitere Beispiele für mögliche Maßnahmen, die basierend auf einer Anwendung des RSSI(i,1)-Werts bzw. von Empfangssignalstörinformationen vorgenommen werden können, umfassen eine Erhöhung der Redundanz, mit der die Daten bei dem Sendevorgang TX(i) gesendet werden, um die Datenübertragungssicherheit bei einer schlechten Funkverbindung bzw. einem niedrigeren RSSI-Wert zu erhöhen.

Falls die Entscheidung von Schritt 330 ergibt, daß der Wert RSSI(i,1) nicht auf den Sendevorgang TX(i) angewendet werden darf, gibt beispielsweise, wie es bezugnehmend auf Fig. 1 beschrieben wurde, das Anwendungsüberwachungsmodul Werte an das Leistungsverwaltungsmodul aus, die dem Worst-Case-Fall entsprechen.

Während des Active-Slots 260d werden nicht nur die im vorhergehenden erwähnten Maßnahmen ausgeführt, sondern in einem Schritt 350 werden ferner basierend auf dem Vergleich von Schritt 330 Entscheidungen bezüglich des nächsten Empfangsrahmens RX(i+1,1) getroffen. Falls sich die Frequenzen PLL_RX(i,1) und PLL_TX(i,1) unterscheiden, kann der Empfangsparameter RSSI(i,1) ebenfalls nicht auf den Empfangsvorgang RX(i+1,1) angewendet werden. In dem Fall, daß sich die Frequenzen PLL_RX(i,1) und PLL_TX(i,1) nicht unterscheiden, besteht die Möglichkeit, daß der RSSI-Wert RSSI(i,1) des Empfangsvorgangs RX(i,1) auf den nächsten Empfangsvorgang RX(i+1,1) angewendet werden kann, wie es im folgenden erläutert werden wird.

Ein Schritt 360 während des Zeitschlitzes 260e des Empfangsvorgangs RX(i+1) 220 entspricht dem Schritt 300. dementsprechend wird in dem Schritt 360 die Empfangsfrequenz PLL_RX(i+1,1) erfaßt. In einem Schritt 370 während des selben Zeitschlitzes 260e wird die Empfangsfrequenz des Rahmens i+1 210, d.h. PLL_RX(i+1,1) mit den Sendefrequenzen PLL_TX(i,1) des Rahmens i 200 verglichen. Basierend auf diesem Vergleich werden in dem Schritt 370 bestimmte Entscheidungen hinsichtlich der Leistungsverwaltung bezüglich des Zeitschlitzes 260f des Empfangsvorgangs RX(i+1) 230 des Rahmens i+1 210, die in dem Schritt 350 getroffen wurden, rückgängig gemacht, wenn der Basisbandprozessor eine Kanalneueinteilung ausgeführt hat. Insbesondere kann der RSSI-Wert RSSI(i,1), der während des Zeitschlitzes 260b gemessen wurde, nicht auf den Empfangsvorgang RX(i+1,1) bei dem Zeitschlitz 260f angewendet werden, wenn der Vergleich von Schritt 370 einen Frequenzwechsel ergibt bzw. sich die Frequenz PLL_RX(i+1,1) von der Frequenz PLL_TX(i,1) unterscheidet. Die beiden Vergleiche bei den Schritten 330 und 370 stellen nicht nur sicher, daß sich der RSSI(i,1)-Wert auf die selbe Empfangsfrequenz bezieht, d.h. daß PLL_RX(i,1) = PLL_RX(i+1,1) gilt, sondern auch daß der Basisband-Prozessor bei dieser Frequenz geblieben ist und folglich eine geeignete Trägerfrequenz gefunden hat und nicht mehr nach einer solchen sucht. Folglich wird vermieden, daß ein RSSI-Wert eines vorhergehenden Empfangsvorgangs auf einen nächsten Empfangsvorgang angewendet wird, falls sich dieser RSSI-Wert nicht auf die Frequenz des nächsten Empfangsvorgangs bezieht, oder ein fester Kanal erst gesucht wird. Falls der Vergleich jedoch ergibt, daß sich die Frequenzen PLL_RX(i+1,1) und PLL_TX(i,1) nicht unterscheiden, wird die Entscheidung, die in dem Schritt 350 getroffen wurde, bestätigt, und der RSSI-Wert RSSI(i,1) kann auf den Empfangsvorgang RX(i+1,1) angewendet werden.

Die Entscheidung von Schritt 350 bzw. die Bestätigung von Schritt 370 wird auf den Empfangsvorgang RX(i+1,1) während des Zeitschlitzes 260f angewendet. Falls folglich zwischen dem Empfangsvorgang RX(i,1) und dem Empfangsvorgang RX(i+1,1) kein Frequenzwechsel stattfand, wird in dem Schritt 380 der RSSI(i,1)-Wert auf den Empfangsvorgang RX(i+1,1) angewendet. Eine solche Anwendung von RSSI(i,1) weist beispielsweise das Reduzieren der Versorgungsspannung eines rauscharmen Eingangsverstärkers, eines Mischers oder eines Oszillators der Sende/Empfangsschaltung bei einem hohen RSSI-Wert auf, wodurch der Leistungsverbrauch verringert wird. Solche Maßnahmen berücksichtigen, daß bei besseren Empfangsbedingungen bzw. einem höheren RSSI-Wert ein höheres Phasenrauschen bzw. eine niedrigere Verstärkung tolerierbar ist. Das Leistungsverwaltungsmodul kann ferner ein breitbandigeres Filter aus einer Mehrzahl von Filtern auswählen, falls die Empfangssignalstörinformationen anzeigen, daß wenig Störer in dem Empfangsband vorhanden sind. Aufgrund der damit verbundenen möglichen Reduzierung der Einfügedämpfung des Filters kann das Leistungsverwaltungsmodul 30 ferner die Verstärkung von Zwischenfrequenzverstärkern der Sende/Empfangsschaltung reduzieren. Folglich können Leistungseinsparungen vorgenommen werden, ohne daß bei einem Frequenzwechsel bzw. einer Kanalneueinteilung eine untolerierbare Empfangssignalverschlechterung eintritt. Allgemein können mehr Parameter vorgesehen sein, durch die die elektronischen Komponenten der Sende/Empfangsschaltung eingestellt werden können, wie z.B. Versorgungsspannungen, Biasspannungen, usw.

Die in Fig. 3 gezeigten darauffolgenden Schritte 390, 400, 410, 420 und 430 entsprechen den vorhergehenden Schritten 310 - 350 und werden folglich nicht noch einmal erläutert und es entsteht folglich ein geschlossener Kontrollkreis.

Es wird darauf hingewiesen, daß es zusätzlich vorgesehen sein kann, daß das Leistungsverwaltungsmodul zusätzlich Signale von dem Basisbandprozessor einliest, die angeben, ob ein Empfangsvorgang oder ein Sendevorgang vorliegt. Herkömmlicherweise dienen dieselben dem Ein- und Ausschalten von gewissen Blöcken des Empfangs- und Sendepfads der Sende/Empfangsschaltung und führen so zu einer Verlustleistungsminderung. Für das Leistungsverwaltungsmodul sind diese Signale zu Synchronisierungszwecken mit dem Funksystem hilfreich. Diese Signale können ferner von dem Anwendungsüberwachungsmodul zu Synchronisierungszwecken mit dem Funksystem verwendet werden.

Bezugnehmend auf Fig. 3 wird darauf hingewiesen, daß der Schritt 350 weggelassen und in den Schritt 370 aufgenommen werden kann. Der Schritt 350 kann ferner bereits während des Blind-Slots 260c durchgeführt werden. Es wird ferner darauf hingewiesen, daß, obwohl im vorhergehenden als Empfangsparameter lediglich der RSSI-Wert und die Empfangssignalstörinformationen verwendet wurden, auch lediglich einer der beiden Werte verwendet werden kann, oder daß andere Empfangsparameter als diese verwendet werden.

Nachdem im vorhergehenden bezugnehmend auf Fig. 2 und 3 die Funktionsweise einer erfindungsgemäßen Vorrichtung für TDD-Systeme beschrieben worden ist, wird im folgenden die Funktionsweise einer erfindungsgemäßen Vorrichtung bezugnehmend auf FDD-Verfahren erläutert. Bei FDD-Systemen werden zwei Frequenzen pro Benutzer verwendet, d.h. eine zum Senden und eine zum Empfangen von Daten, wobei diese Frequenzen einen gewissen Frequenzabstand zueinander aufweisen. Bei diesen Systemen ist es deshalb nicht möglich, die erfaßten Empfangsparameter zu verwenden, um Rückschlüsse für eine Leistungsverwaltung bei Sendevorgängen zu verwenden, da sich Sende- und Empfangsfrequenz grundsätzlich immer unterscheiden. Bei FDD-Systemen liest deshalb das Anwendungsüberwachungsmodul bei jedem Empfangsvorgang die durch den 3-Draht-Bus von dem Basisbandprozessor gelieferten Bits und erfaßt somit die Empfangsfrequenz der jeweiligen Empfangsvorgänge. Über die von der Sende/Empfangsschaltung gelieferten Signale erfaßt das Anwendungsüberwachungsmodul die Empfangsparameter zu jedem Empfangsvorgang. Das Anwendungsüberwachungsmodul vergleicht die Empfangsfrequenz eines vorhergehenden Empfangsvorgangs mit der Empfangsfrequenz des nächsten Empfangsvorgangs. Falls die beiden Frequenzen identisch sind, kann das Leistungsverwaltungsmodul die im vorhergehenden erläuterten Einsparungsmaßnahmen bezüglich des nächsten Empfangsvorgangs auf der Grundlage des Empfangsparameters des vorhergehenden Empfangsvorgangs durchführen. Falls die Frequenzen nicht übereinstimmen, hat der Basisbandprozessor einen Frequenzwechsel bzw. eine Kanalneueinteilung vorgenommen, so daß der Empfangsparameter bzw. die Empfangsparameter für den nächsten Empfangsvorgang keinerlei Bedeutung haben, bzw. der Empfangsparameter nicht auf den nächsten Empfangsvorgang angewendet werden kann, um eine Leistungsverwaltung vorzunehmen. Die Vergleichsüberprüfung stellt sicher, daß Leistungseinsparungen aufgrund eines Empfangsparameters nur dann vorgenommen werden, falls sich derselbe auf die Frequenz des nächsten Empfangsvorgangs bezieht. Auf diese Weise werden fehlerhafte Übertragungen aufgrund unzulässiger Leistungseinsparungen basierend auf einem ungültigen RSSI-Wert vermieden. Folglich ist das Grundprinzip der vorliegenden Erfindung nicht nur auf FDMA/TDMA/TDD-Zugriffsverfahren, sondern ferner auch auf FDMA/TDMA/FDD-Systeme anwendbar.

Die hier beschriebenen erfindungsgemäßen Vorrichtungen und Verfahren liefern folglich eine Leistungsoptimierung, d.h. eine Systemeigenschaft, die bei tragbaren Geräten sehr wichtig ist. Die beschriebene Überwachung der Belegung der Kanäle und der entsprechenden Empfangssignalstärke jedes Benutzers kann zu einer intelligenten Steuerung des Sendeempfängers führen, wie es im vorhergehenden beschrieben wurde, die eine Verlustleistungsminderung oder andere wünschenswerte Übertragungsverbesserungen, wie z.B. Übertragungsfehlerreduzierung, verursacht. Ein Leistungsverwaltungsmodul verarbeitet die Signale, die den Basisbandprozessor und die Sendeempfangsschaltung, verbinden und ermöglicht eine dynamische Erkennung der Eigenschaften des Systems. Die daraus abgeleiteten Maßnahmen gewährleisten einen leistungsarmen Betrieb des Geräts. Hierzu sind die Kanalbelegungsinformationen für mögliche dynamische Leistungsverwaltungsmaßnahmen sehr hilfreich. Solange ein Benutzer den selben Kanal belegt, kann davon ausgegangen werden, daß der empfangene Signalpegel ausreichend ist und keine Kanalneuzuteilung erforderlich wird.

Sende/Empfangsschaltungen sind normalerweise für den Worst-Case ausgelegt, wobei die Messung des RSSI-Werts zur Kanalneuzuteilung verwendet werden kann. Dieser RSSI-Wert ist das zweite Entscheidungselement dieser Systemüberwachung. Die Kenntnis der Frequenz-Zeit-Eigenschaften, d.h. welcher Träger in welchem Zeitschlitz verwendet wird, des ganzen Rahmens und der Empfangsbedingungen in Bezug auf die Signalstärke bzw. die RSSI-Werte von allen Empfangszeitschlitzen dient zu Leistungsverwaltungsmaßnahmen, wie es im vorhergehenden erläutert wurde. Diesbezüglich wird darauf hingewiesen, daß, obwohl zum besseren Verständnis des Grundgedankens der Erfindung in der vorhergehenden Beschreibung spezielle Leistungsverwaltungsmaßnahmen beschreiben worden sind, durch die vorliegende Erfindung ganz allgemein alle Maßnahmen gesteuert werden können, die die Steuerung, Konfigurierung und Versorgung einzelner Systemkomponenten der Sende/Empfangsvorrichtung gemäß einem oder mehreren die Empfangsbedingungen beschreibenden Werten, wie z.B. dem RSSI-Wert, betreffen. Darüber hinaus können auch Maßnahmen getroffen werden, die sich nicht auf eine Leistungeinsparung sondern auf andere wünschenswerte Übertragungsanpassungen, wie z.B. die Übertragungssicherheit, beziehen.

Abschließend wird darauf hingewiesen, daß, obwohl im vorhergehenden das Anwendungsüberwachungsmodul getrennt von dem Leistungsverwaltungsmodul dargestellt worden ist, die beiden Module in einem einzigen Modul integriert sein können. In diesem Fall könnte es vorgesehen sein, daß dieses gemeinsame Modul eine Schnittstelle zwischen dem Basisband-Prozessor und der Sende/Empfangsschaltung bildet. Es wird ferner darauf hingewiesen, daß, obwohl im Bezug auf Fig. 2 und 3 ein spezielles TDD-System beschrieben worden ist, die vorliegende Erfindung auch auf FDD-Systeme anwendbar ist, die eine andere Rahmenstruktur aufweisen. Grundsätzlich ist die vorliegende Erfindung auf alle FDMA/TDMA-Systeme, wie z.B. schnurlose Telefone des DECT-Standards, einige Mobiltelefonstandards, wie z.B. PACS-UB und PHS, sowie herkömmliche FDD-Full-Duplex-basierte Mobiltelefonstandards, wie z.B. GSM, DCS und PCS, anwendbar.

## Patentansprüche

1. Verfahren zum Steuern der Verwendung eines Empfangsparameters eines vorhergehenden Empfangsvorgangs zur Steuerung einer Sende/Empfangsvorrichtung während eines Sendevorgangs, wobei der Empfangsparameter eine Empfangsbedingung des vorhergehenden Empfangsvorgangs angibt, mit folgenden Schritten:
Erfassen (300) der Empfangsfrequenz des vorhergehenden Empfangsvorgangs;
Erfassen (310) des Empfangsparameters des vorhergehenden Empfangsvorgangs; und
Erfassen (320) der Sendefrequenz des Sendevorgangs,
**gekennzeichnet durch**
Vergleichen (330) der Sendefrequenz des Sendevorgangs mit der Empfangsfrequenz des vorhergehenden Empfangsvorgangs;
Anwenden (340) des Empfangsparameters bei der Steuerung der Sende/Empfangsvorrichtung während des Sendevorgangs, falls die Sendefrequenz und die Empfangsfrequenz übereinstimmen; und
Unterdrücken (340) der Anwendung, falls sich die Sendefrequenz und die Empfangsfrequenz unterscheiden.

2. Vorrichtung zum Steuern der Verwendung eines Empfangsparameters eines vorhergehenden Empfangsvorgangs zur Steuerung einer Sende/Empfangsvorrichtung während eines Sendevorgangs, wobei der Empfangsparameter eine Empfangsbedingung des vorhergehenden Empfangsvorgangs angibt, mit
einer Einrichtung (10) zum Erfassen einer Sendefrequenz des Sendevorgangs und zum Erfassen einer Empfangsfrequenz des vorhergehenden Empfangsvorgangs; und
einer Einrichtung (20) zum Erfassen des Empfangsparameters des vorhergehenden Empfangsvorgangs,
**gekennzeichnet durch**
eine Vergleichseinrichtung (40) zum Vergleichen der Sendefrequenz des Sendevorgangs mit der Empfangsfrequenz des vorhergehenden Empfangsvorgangs und zum Anwenden des Empfangsparameters bei der Steuerung der Sende/Empfangsvorrichtung während des Sendevorgangs, falls die Sendefrequenz und die Empfangsfrequenz übereinstimmen, und zum Unterdrücken der Anwendung, falls sich die Sendefrequenz und die Empfangsfrequenz unterscheiden.

3. Vorrichtung gemäß Anspruch 2, bei der die Sende/Empfangsvorrichtung eine Sende/Empfangsvorrichtung mit Zeitunterteilungsduplexbetrieb ist.

4. Vorrichtung gemäß Anspruch 2 oder 3, bei der der die Empfangsbedingungen des vorhergehenden Empfangsvorgangs angebende Empfangsparameter eine Empfangssignalstärke und/oder Empfangssignalstörinformationen des vorhergehenden Empfangsvorgangs aufweist.

5. Vorrichtung gemäß einem der Ansprüche 2 bis 4, die ferner folgendes Merkmal aufweist:
eine erste Leistungsverwaltungseinrichtung (30), die auf das Anwenden des die Empfangsbedingungen des vorhergehenden Empfangsvorgangs angebenden Empfangsparameters bei der Steuerung der Sende/Empfangsvorrichtung während des Sendevorgangs anspricht, zum Steuern, Konfigurieren und Versorgen einzelner elektronischer Komponenten der Sende/Empfangsvorrichtung gemäß dem Empfangsparameter.

6. Vorrichtung gemäß Anspruch 5, bei der die erste Leistungsverwaltungseinrichtung (30) folgendes Merkmal aufweist:
eine Einrichtung zum Einstellen einer Versorgungsspannung oder einer Bias-Spannung bezüglich bestimmter elektronischer Komponenten der Sende/Empfangsvorrichtung.

7. Vorrichtung gemäß einem der Ansprüche 2 bis 6, wobei die Vorrichtung ferner die Verwendung des die Empfangsbedingungen des vorhergehenden Empfangsvorgangs angebenden Empfangsparameters zur Steuerung der Sende/Empfangsvorrichtung während eines nächsten Empfangsvorgangs steuert, und die Vergleichseinrichtung (40) ferner folgendes Merkmal aufweist:
eine Vergleichseinrichtung (40) zum Vergleichen der Sendefrequenz des Sendevorgangs mit der Empfangsfrequenz des nächsten Empfangsvorgangs und zum Anwenden des Empfangsparameters bei der Steuerung der Sende/Empfangsvorrichtung während des nächsten Empfangsvorgangs, falls die Sendefrequenz und die Empfangsfrequenz übereinstimmen, und zum Unterdrücken der Anwendung, wenn sich die Sendefrequenz und die Empfangsfrequenz unterscheiden.

8. Vorrichtung gemäß Anspruch 7, die ferner folgendes Merkmal aufweist:
eine zweite Leistungsverwaltungseinrichtung (30), die auf das Anwenden des die Empfangsbedingungen des vorhergehenden Empfangsvorgangs angebenden Empfangsparameters bei der Steuerung der Sende/Empfangsvorrichtung während des nächsten Empfangsvorgangs anspricht, zum Steuern, Konfigurieren und Versorgen einzelner elektronischer Komponenten der Sende/Empfangsvorrichtung gemäß dem Empfangsparameter.

9. Vorrichtung gemäß Anspruch 8, bei der die zweite Leistungsverwaltungseinrichtung (30) folgendes Merkmal aufweist:
eine Einrichtung zum Reduzieren einer Versorgungsspannung und/oder einer Bias-Spannung bestimmter elektronischer Komponenten der Sende/Empfangsvorrichtung und zum Auswählen eines breitbandigeren Filters mit einer niedrigeren Einfügedämpfung aus einer Mehrzahl von Filtern.

10. Verfahren zum Steuern der Verwendung eines Empfangsparameters eines vorhergehenden Empfangsvorgangs zur Steuerung einer Sende/Empfangsvorrichtung während eines nächsten Empfangsvorgangs, wobei der Empfangsparameter eine Empfangsbedingung des vorhergehenden Empfangsvorgangs angibt, mit folgenden Schritten:
Erfassen der Empfangsfrequenz des vorhergehenden Empfangsvorgangs;
Erfassen des Empfangsparameters des vorhergehenden Empfangsvorgangs; und
Erfassen der Empfangsfrequenz des nächsten Empfangsvorgangs,
**gekennzeichnet durch**
Vergleichen der Empfangsfrequenz des nächsten Empfangsvorgangs mit der Empfangsfrequenz des vorhergehenden Empfangsvorgangs;
Anwenden des Empfangsparameters bei der Steuerung der Sende/Empfangsvorrichtung während des nächsten Empfangsvorgangs, falls die Empfangsfrequenzen übereinstimmen; und
Unterdrücken der Anwendung, falls sich die Empfangsfrequenzen unterscheiden.

11. Vorrichtung zum Steuern der Verwendung eines Empfangsparameters eines vorhergehenden Empfangsvorgangs zur Steuerung einer Sende/Empfangsvorrichtung während eines nächsten Empfangsvorgangs, wobei der Empfangsparameter eine Empfangsbedingung des vorhergehenden Empfangsvorgangs angibt, mit
einer Einrichtung (10) zum Erfassen einer Empfangsfrequenz des nächsten Empfangsvorgangs und zum Erfassen einer Empfangsfrequenz des vorhergehenden Empfangsvorgangs;
**gekennzeichnet durch**
eine Einrichtung (20) zum Erfassen des Empfangsparameters des vorhergehenden Empfangsvorgangs; und
einer Vergleichseinrichtung (40) zum Vergleichen der Empfangsfrequenz des nächsten Empfangsvorgangs mit der Empfangsfrequenz des vorhergehenden Empfangsvorgangs und zum Anwenden des Empfangsparameters bei der Steuerung der Sende/Empfangsvorrichtung während des nächsten Empfangsvorgangs, falls die Empfangsfrequenzen übereinstimmen, und zum Unterdrücken der Anwendung, wenn sich die Empfangsfrequenzen unterscheiden.

12. Vorrichtung gemäß Anspruch 11, bei der die Sende/Empfangsvorrichtung eine Sende/Empfangsvorrichtung mit Frequenzunterteilungsduplexbetrieb ist.

13. Vorrichtung gemäß Anspruch 11 oder 12, bei der der die Empfangsbedingungen eines vorhergehenden Empfangsvorgangs angebende Empfangsparameter eine Empfangssignalstärke und/oder Empfangssignalstörinformationen des vorhergehenden Empfangsvorgangs aufweist.

14. Vorrichtung gemäß einem der Ansprüche 11 bis 13, die ferner folgendes Merkmal aufweist:
eine Leistungsverwaltungseinrichtung (30), die auf das Anwenden des die Empfangsbedingungen eines vorhergehenden Empfangsvorgangs angebenden Empfangsparameters bei der Steuerung der Sende/Empfangsvorrichtung während des nächsten Empfangsvorgangs anspricht, zum Steuern, Konfigurieren und Versorgen einzelner elektronischer Komponenten der Sende/Empfangsvorrichtung gemäß dem Empfangsparameter.

15. Vorrichtung gemäß Anspruch 14, bei der die Leistungsverwaltungseinrichtung (30) folgendes Merkmal aufweist:
eine Einrichtung zum Reduzieren einer Versorgungsspannung und/oder einer Bias-Spannung bestimmter elektronischer Komponenten der Sende/Empfangsvorrichtung und zum Auswählen eines breitbandigeren Filters mit einer niedrigeren Einfügedämpfung aus einer Mehrzahl von Filtern.
